# EUROPÄISCHE PATENTSCHRIFT

(11) **EP 1 502 343 B1**
(45) Veröffentlichungstag und Bekanntmachung des Hinweises auf die Patenterteilung: **22.07.2009**
(21) Anmeldenummer: 03729832.0
(22) Anmeldetag: 10.04.2003
(51) Int. Cl.: H02H 3/00

(54) **ELEKTRISCHER LEISTUNGSSCHALTER MIT EINEM ELEKTRONISCHEN SPEICHER FÜR KENNGRÖSSEN UND UMRECHNUNGSFAKTOREN**
ELECTRIC POWER SWITCH WITH AN ELECTRONIC MEMORY UNIT FOR PARAMETERS AND CONVERSION FACTORS
DISJONCTEUR ELECTRIQUE COMPRENANT UNE MEMOIRE ELECTRONIQUE POUR DES PARAMETRES CARACTERISTIQUES ET DES FACTEURS DE CONVERSION

(30) Priorität: 08.05.2002 DE 10221572
(43) Veröffentlichungstag der Anmeldung: 02.02.2005
(73) Patentinhaber: SIEMENS AKTIENGESELLSCHAFT, 80333 München (DE)
(72) Erfinder: DRIEHORN, Thomas, 12249 Berlin (DE); KRAUSS, Andreas, 10825 Berlin (DE); MUSIOL, Aron-Ernst, 15831 Mahlow (Waldblick) (DE); RÖHL, Wolfgang, 13503 Berlin (DE); REDMANN, Ilka, 10555 Berlin (DE); PANCKE, Andreas, 13507 Berlin (DE)
(86) Internationale Anmeldenummer: PCT/DE2003/001258
(87) Internationale Veröffentlichungsnummer: WO 2003/096506

(56) Entgegenhaltungen:
- US-A- 4 996 646

## Beschreibung

Die Erfindung betrifft einen elektrischen Leistungsschalter mit einer elektronischen Schutzeinrichtung und mit einem von der Schutzeinrichtung räumlich getrennt im Leistungsschalter untergebrachten und von der Schutzeinrichtung les- und beschreibbaren elektronischen Speicher für betriebliche Daten des Leistungsschalters.

Ein Leistungsschalter dieser Art ist z. B. durch die DE 100 19 092 A1 bekannt geworden. Die in bekannter Weise als elektronischer Überstromauslöser ausgebildete Schutzeinrichtung befindet sich dabei in einem vorderen Bereich des Leistungsschalters hinter einem Bedienpult. Dagegen sind Stromwandler bzw. Stromsensoren, die Messwerte des Stromes in jedem der Pole des Leistungsschalters erfassen und eine zum Betrieb der Schutzeinrichtung benötigte Hilfsenergie bereitstellen, an der dem Bedienpult gegenüberliegenden Rückseite des Leistungsschalters angeordnet. Ein Kabelbaum verbindet diese beiden Bereiche des Leistungsschalters. Der zur Speicherung von der Baugröße und Ausstattung des Leistungsschalters abhängiger Kenngrößen und Umrechnungsfaktoren dienende elektronische Speicher ist in Zuge dieses Kabelbaumes angeordnet.

Ein weitere bekannte Anwendung eines von der Schutzeinrichtung räumlich getrennten elektronischen Speichers ist ein Bemessungsstromstecker nach der US 4,958,252. In diesem Fall dient der Speicher zur Aufzeichnung von betrieblichen Ereignissen, insbesondere Anzahl der Schaltvorgänge und Höhe des jeweils unterbrochenen Stromes, um daraus den Zeitpunkt einer notwendigen Wartung des Leistungsschalters zu ermitteln.

Ist ein elektronischer Speicher der genannten Art von der Schutzeinrichtung räumlich getrennt im Leistungsschalter angeordnet, so wird zur Kommunikation zwischen diesen Einheiten eine Verbindungsleitung oder Kabelbaum benötigt. Dabei kann der elektronische Speicher im Zuge des Kabelbaumes angeordnet sein, wie dies in der erwähnten DE 100 19 092 A1 beschrieben ist. Damit sind alle zusammenwirkenden Bauteile bzw. Einheiten dem störenden Einfluss der in einem Leistungsschalter auftretenden magnetischen, elektrischen und elektromagnetischen Felder ausgesetzt. Da die Empfindlichkeit elektronischer Bauteile und Schaltungen gegen Einflüsse dieser Art bekannt ist, hat man Abschirmungen angebracht, um Störungen in der Funktion der Schutzeinrichtungen zu vermeiden (US 5,303,113).

Die steigenden Anforderungen an das Schaltvermögen von Leistungsschaltern führen allerdings dazu, dass auch die elektromagnetischen Einflüsse auf alle elektronischen Bauteile eines Leistungsschalters entsprechend zunehmen. Obwohl umfangreiche Erfahrungen in der Beherrschung dieser Einflüsse bestehen, erscheint es im Interesse der Sicherheit erwünscht, die elektromagnetische Verträglichkeit (EMV) insbesondere des gesondert angeordneten elektronischen Speichers zu erhöhen. Dabei steht die Überlegung im Vordergrund, dass bei der Kommunikation zwischen der Schutzeinrichtung und dem Speicher durch ein zufällig stark erhöhtes Störfeld Adressinformationen sowie Schreib- und Leseinformationen verändert werden können. Beispielsweise kann, ohne dass ein Benutzer dies zu erkennen vermag, anstelle eines Lesevorganges ein Schreibvorgang stattfinden. Unter Umständen kann auf diese Weise das Verhalten der Schutzeinrichtung beeinflusst werden, was zu einer unerwünschten Auslösung des Leistungsschalters führen kann oder zu deren Unterdrückung, obwohl sie erforderlich wäre.

An sich liegt es nahe, diese unerwünschten Einflüsse durch die Benutzung des internen Schreibschutzes der elektronischen Speicher auszuschließen. Die Speicherbausteine (EEPROM) verfügen hierzu über einen gesonderten Eingang (WC = WRITE CONTROL), der je nach anliegendem Potential den Schreibschutz aufhebt oder herstellt, wie dies z. B. in der US 5,363,334 beschrieben ist. In einem Leistungsschalter ist jedoch der Speicher nicht zugänglich, z. B. bei der Anordnung im Zuge eines Kabelbaumes nach der DE 100 19 092 A1. Daher lässt sich eine üblicherweise vorgesehene Steckbrücke ("jumper") nicht benutzen. Auch eine elektrische Beschaltung des Schreibschutz-Einganges eines Speichers (EEPROM) stößt auf Schwierigkeiten, weil eine hierzu benötigte zusätzliche Leitung nicht zur Verfügung steht und ihre Nachrüstung einen unerwünschten zusätzlichen Aufwand darstellt.

Der Erfindung liegt hiervon ausgehend die Aufgabe zu Grunde, die Datensicherheit bei der Benutzung eines elektronischen Speichers in einem Leistungsschalter mit möglichst einfachen und dennoch wirksamen Mitteln wesentlich zu verbessern.

Gemäß der Erfindung wird diese Aufgabe durch das kennzeichnenden Teil des Anspruchs 1 gelöst. Durch die Ausbildung der Verbindung von Schutzeinrichtung und Speicher als Datenbus entsteht kein zusätzlicher Aufwand, weil lediglich zwei Leiter für die Datenübertragung benötigt werden (serieller Bus). Hinzu kommen zwei Leiter für die Stromversorgung, so dass insgesamt vier Leiter benötigt werden. Diese Anzahl von Leitern wurde auch bisher benutzt, erlaubte jedoch keine Ausnutzung des Schreibschutzes des elektronischen Speichers.

Im Rahmen der Erfindung kann der Datenbus als I²C-Bus ausgebildet sein, wobei dem mittels des I²C-Busses steuerbaren elektronischen Speicher ein gleichfalls mittels des I²C-Busses durch die Schutzeinrichtung steuerbarer digitaler I/O-Baustein zugeordnet ist, durch dessen Ausgang der Schreibschutz des elektronischen Speichers aktivierbar bzw. deaktivierbar ist.

Die in der DE 100 19 092 A1 beschriebene Anordnung ist auch im Rahmen der Erfindung einsetzbar, und zwar in der Weise, dass der als EEPROM ausgebildete elektronische Speicher und der digitale I/O-Baustein in einem im Zuge eines vieradrigen Kabelbaumes angeordneten gemeinsamen Gehäuse untergebracht sind.

Die Erfindung wird im Folgenden anhand der in den Figuren gezeigten Ausführungsbeispiele näher erläutert.

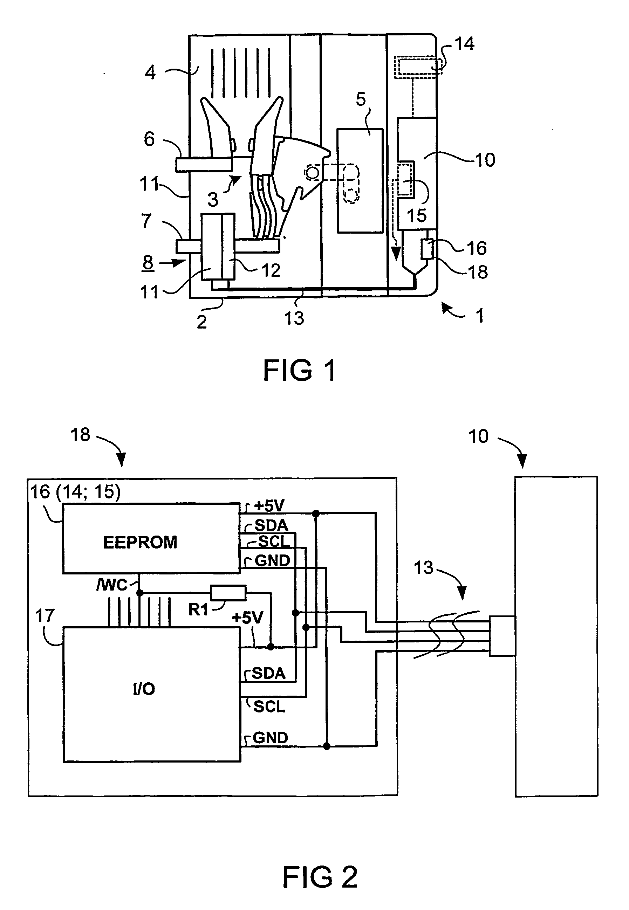

Der in der Figur 1 gezeigte Niederspannungs-Leistungsschalter 1 besitzt in bekannter Weise ein Gehäuse 2, in welchem für jeden Pol eine Schaltkontaktanordnung 3 mit zugehöriger Löschkammer 4 und eine Antriebsvorrichtung 5 zur gemeinsamen Betätigung aller vorhandener Schaltkontaktanordnungen untergebracht sind. Jede der Schaltkontaktanordnungen 3 weist eine obere Anschlussschiene 6 und eine untere Anschlussschiene 7 auf, um den Leistungsschalter 1 mit einem Stromkreis zu verbinden. Jede der unteren Anschlussschienen 7 ist mit einem Wandlersatz 8 versehen, der den über die zugehörige Schaltkontaktanordnung 3 fließenden Strom erfasst und zusätzlich eine Hilfsenergie zum Betrieb eines elektronischen Überstromauslösers 10 bereitstellt. Hierzu umfasst jeder Wandlersatz 8 einen Stromwandler 11 sowie einen Energiewandler 12.

Die Anschlussschienen 6 und 7 sowie die Wandlersätze 8 befinden sich an der Rückseite des Gehäuses 2, während der als Schutzeinrichtung 10 vorgesehene elektronische Überstromauslöser an der gegenüberliegenden Frontseite des Gehäuses 2 zugänglich ist. Zur Verbindung der Wandlersätze 8 mit der Schutzeinrichtung 10 ist ein Kabelbaum 13 vorgesehen, der in hierzu im Gehäuse 2 vorgesehenen Kanälen verlegt ist, welche die Antriebsvorrichtung 5 und die Schaltkontaktanordnungen 3 umgehen.

Ein ordnungsgemäßes Zusammenwirken der Schutzeinrichtung 10 und der Stromwandler 11 erfordert es, dass die Schutzeinrichtung 10 die ihr zugeführten Stromsignale mit einem Umrechnungsfaktor verarbeitet, der von dem Nennstrom der Stromwandler, der Baugröße des Leistungsschalters und gegebenenfalls weiteren Parametern abhängt. Hierzu ist es bekannt, als Bemessungsstromstecker (Rating Plug), Interface-Modul oder Schalterkennmodul bezeichnete elektrische und/oder elektronische Baugruppen vorzusehen, die nicht in der Schutzeinrichtung 10 selbst angeordnet sind, sondern als periphere Baugruppe mit ihr verbunden sind. Einige der üblichen Anordnungen sind in der Figur 1 angedeutet. Mit 14 ist dabei ein Bemessungsstromstecker etwa nach der DE 100 27 934 A1 oder der US 4,958,252 bezeichnet. Ferner kann ein Informationsspeicher der genannten Art nach der EP 0 847 587 B1 (entspricht der US 6,034,859) an der Rückseite der Schutzeinrichtung 10 angeordnet sein, wie dies bei 15 angedeutet ist. Eine weitere Möglichkeit der Anordnung eines Informationsspeichers ist in der DE 100 19 092 A1 beschrieben, wonach der Informationsspeicher im Zuge eines die Schutzeinrichtung 10 und den Wandlersatz verbindenden Kabelbaumes bei 16 angeordnet ist. Bei der Ausführung der genannten Informationsspeicher als elektrisch löschbare, programmierbare nur lesbare Speicher (EEPROM) wird nach der vorliegenden Erfindung durch die Ausnutzung des in den elektronischen Speichern vorhandenen Schreibschutzsystems eine wesentlich verbesserte Datensicherheit erreicht. Einzelheiten dieses Schreibschutzsystems werden nachstehend anhand der Figur 2 näher erläutert.

Die Figur 2 veranschaulicht die Schaltung des in dem Kabelbaum 13 angeordneten elektronischen Speichers 16. Dieser ist zusammen mit einem I/O-Baustein 17 in einem Gehäuse 18 untergebracht. Von dem Kabelbaum 13 ist nur der sich zwischen dem Gehäuse 18 und der Schutzeinrichtung 10 erstreckende Teil gezeigt, weil der zu den Stromwandlern 11 bzw. 12 weiterführende Teil für das Verständnis der Erfindung ohne Bedeutung ist. Der elektronische Speicher 16 ist ein Speicher der Bauart EEPROM (elektrisch löschbarer programmierbarer Nur-Lesespeicher - electrically erasable programmable read only memory), und zwar in einer zur Verwendung mit dem I²C-Bus vorgesehenen Bauform. Der I²C-Bus, wie er z. B. an der Internet-Adresse http://www.embedded.com/97/feat9711.htm dokumentiert ist, dient als serielles Steuerungsmittel zur Verbindung von integrierten Schaltungen. Demzufolge weist der Speicher 16 lediglich vier für den Betrieb erforderliche Anschlüsse, nämlich zwei für die Stromversorgung und zwei weitere für die Datenübertragung auf. In der Figur 2 sind die für die Stromversorgung vorgesehenen Anschlüsse mit +5V und GND bezeichnet, während die für die Datenübertragung vorgesehenen Anschlüsse mit SDA (data = Daten) und SCL (clock = Takt) bezeichnet sind. Als weiteren Anschluss besitzt der Speicher 16 einen Anschluss /WC (Schreibschutz = writecontrol) auf, der bei Beaufschlagung mit Hochpegel ("high") den Schreibschutz aktiviert und bei Beaufschlagung mit Niedrigpegel ("low") den Schreibschutz deaktiviert, d. h. ein Beschreiben des Speichers zulässt. Die genannten vier Anschlüsse des Speichers 16 sind mit entsprechenden Leitungsadern des Kabelbaumes 13 mit der Schutzeinrichtung 10 verbunden. Somit können, gesteuert durch die Schutzeinrichtung 10 bzw. unter Verwendung eines externen oder eines mit der Schutzeinrichtung 10 verbundenen Bediengerätes Daten in den Speicher 16 eingelesen bzw. ausgelesen werden. Insbesondere kann es sich hierbei um Daten handeln, welche den Umrechnungsfaktor von Messwerten der Stromwandler 11 und weitere, den Leistungsschalter 1 hinsichtlich seiner Bauart betreffende Parameter enthalten.

Der Speicher 16 erhält normalerweise seine Grunddaten bei der Herstellung und Ausrüstung des Leistungsschalters 1 beim Hersteller. Im Betrieb greift die Schutzeinrichtung 10 auf die gespeicherten Daten zurück, d. h. liest die gespeicherten Daten und verarbeitet sie zusammen mit den vom Wandlersatz 8 gelieferten Messwerten des Stromes zur Auslösung bei Überstrom, Erdschluss und Kurzschluss. Änderungen am Leistungsschalter 1 hinsichtlich seiner Bestückung mit Stromwandlern oder einer veränderten Betriebsweise können Anlass sein, die gespeicherten Daten im Speicher 16 zu ändern. Somit kommt es im Betrieb des Leistungsschalters 1 (Figur 1) regelmäßig zum Auslesen des Speicherinhaltes des Speichers 16. Dieser über den Kabelbaum 13 abgewickelte Datenverkehr unterliegt jedoch, wie auch andere im Leistungsschalter 1 untergebrachte elektronische Baugruppen, dem Einfluss störender magnetischer, elektrischer und elektromagnetischer Felder, die von den stromführenden Schaltkontaktanordnungen und Schaltlichtbögen in den Lichtbogenlöschkammern 4 ausgehen. Ähnliche, wenngleich schwächere störende Einflüsse können von benachbarten Leistungsschaltern ausgehen, wenn man berücksichtigt, dass Leistungsschalter in Schaltanlagen häufig in enger Nachbarschaft eingebaut sind. Obwohl im Betrieb über längere Zeiträume festgestellt wurde, dass die genannten Störfelder den Datenverkehr zwischen der Schutzeinrichtung 10 und dem Speicher 16 nicht beeinträchtigen, kann nicht ausgeschlossen werden, dass in Abhängigkeit von der Stärke der Störfelder und einem statistischen Zusammentreffen ungünstiger Bedingungen dennoch Fehler auftreten können. Ein solcher Fehler kann beispielsweise darin bestehen, dass anstelle eines Lesevorganges ein Schreibvorgang stattfindet. Wird nun hierdurch beispielsweise ein den Umrechnungsfaktor darstellender Speicherwert verändert, so kann dies Anlass für eine Auslösung bei einem zu niedrigen Strom sein, was zu betrieblichen Störungen führen kann. Wird dagegen die Auslösung zu höheren Werten des Stromes verschoben, so kann dies eine schwerwiegende Beeinträchtigung der Sicherheit darstellen.

Vorgänge der geschilderten Art werden nach der Erfindung dadurch weitgehend beseitigt, dass eine an dem Speicher 16 als Standard vorgesehene Schreibschutzeinrichtung in Betrieb genommen wird. Dies geschieht, ohne dass hierzu die Anzahl der in dem Kabelbaum 13 vorhandenen Leiter vergrößert werden muss. Daher kann unverändert der vorhandene Kabelbaum mit vier Leitern genutzt werden. Die Steuerung des Schreibschutzeinganges /WC des Speichers 16 erfolgt durch einen zusätzlichen I/O-Baustein 17, der in gleicher Weise wie der Speicher 16 für den Betrieb an dem I²C-Bus-System eingerichtet ist. Demzufolge besitzt der I/O-Baustein 17 die gleichen Anschlüsse +5V, SDA, SCL und GND. Zusätzlich sind Ausgänge vorhanden, die der Benutzer nach Bedarf einsetzen kann. Mit einem dieser Ausgänge ist der Schreibschutzanschluss /WC des Speichers 16 direkt verbunden. Durch eine Verbindung des Schreibschutzanschlusses /WC des Speichers 16 mit dem Anschluss +5V über einen Wiederstand R1 ist im Normalfall der Schreibschutz aktiviert, d. h. es ist nicht möglich, Daten in den Speicher 16 einzulesen, falls eine solche Anweisung aufgrund von Störeinflüssen fehlerhaft ergehen sollte. Nur dann, wenn über den I²C-Bus mittels des Kabelbaumes 13 oder mittels einer zum Anschluss des Kabelbaumes am Gehäuse 18 angebrachten Steckvorrichtung ein Steuerbefehl zum I/O-Baustein 17 übertragen wird, der den Schreibschutz am Eingang/WC des Speichers 16 zu deaktiviert, können die gespeicherten Daten im Speicher 16 verändert oder überschrieben oder können zusätzliche Daten eingeschrieben werden. Dadurch, dass der Speicher 16 und der I/O-Baustein 17 in unmittelbarer Nachbarschaft innerhalb des Gehäuses 18 untergebracht sind, kann davon ausgegangen werden, dass Fehler durch eine direkte Beaufschlagung dieser Schaltungsbaugruppe durch Störfelder unwahrscheinlich sind.

Wenn vorstehend der im Zuge des Kabelbaumes 13 angeordnete Speicher 16 beschrieben ist, so ist dies lediglich als Beispiel für die Schaltung an anderer Stelle des Leistungsschalters 1 angeordneter Speicher zu verstehen. Somit können die Speicher 14 oder 15, die gleichfalls räumlich getrennt von der Schutzeinrichtung 10 angeordnet sind, in gleicher Weise mit einem I/O-Baustein 17 kombiniert und hierdurch mittels der Steuerung über den I²C-Bus gegen fehlerhafte Beschreibung geschützt werden.

## Patentansprüche

1. Elektrischer Leistungsschalter (1) mit einer elektronischen Schutzeinrichtung (10) und mit einem von der Schutzeinrichtung (10) räumlich getrennt im Leistungsschalter (1) untergebrachten und von der Schutzeinrichtung (10) les- und beschreibbaren elektronischen Speicher (14; 15; 16) für betriebliche Daten des Leistungsschalters (1),
**dadurch gekennzeichnet, dass** der elektronische Speicher (14; 15; 16) eine über einen Schreibschutzeingang (/WC) des elektronischen Speichers (14; 15, 16) aktivierbare bzw. deaktivierbare SchreibschutzEinrichtung aufweist, dass der elektronische Speicher (14; 15; 16) mit der Schutzeinrichtung (10) durch einen seriellen Datenbus verbunden ist und dass dem elektronischen Speicher (14; 15; 16) ein gleichfalls mittels des seriellen Datenbusses durch die Schutzeinrichtung (10) steuerbarer digitaler I/O-Baustein (18) zugeordnet ist, wobei der Ausgang des I/O-Baustein (18) zur Aktivierung bzw. Deaktivierung der Schreibschutz-Einrichtung mit dem Schreibschutzeingang (/WC) des elektronischen Speichers (14; 15, 16) verbunden ist.

2. Elektrischer Leistungsschalter nach Anspruch 1
**dadurch gekennzeichnet, dass** der serielle Datenbus als I²C-Bus ausgebildet ist.

3. Leistungsschalter nach einem der Ansprüch 1 oder 2,
**dadurch gekennzeichnet, dass** der als EEPROM ausgebildete elektronische Speicher (14; 15; 16) und der digitale I/O-Baustein (17) in einem im Zuge eines vieradrigen Kabelbaumes (13) angeordneten gemeinsamen Gehäuse (18) untergebracht sind.

## Claims

1. Electrical circuit breaker (1) having an electronic protective device (10) and having an electronic memory (14; 15; 16), which is accommodated in the circuit breaker (1) such that it is physically separated from the protective device (10) and which can be read or written to by the protective device (10), for operational data for the circuit breaker (1),
**characterized in that**
the electronic memory (14; 15; 16) has a write protection device which can be activated or deactivated via a write protection input (/WC) of the electronic memory (14; 15; 16), **in that** the electronic memory (14; 15; 16) is connected to the protective device (10) via a serial data bus, and **in that** the electronic memory (14; 15; 16) has an associated digital I/O module (18) which can likewise be controlled by the protective device (10) by means of the serial data bus, the output of the I/O module (18) being connected to the write protection input (/WC) of the electronic memory (14; 15; 16) for the purpose of activating or deactivating the write protection device.

2. Electrical circuit breaker as claimed in Claim 1,
**characterized in that**
the serial data bus is in the form of an I²C bus.

3. Circuit breaker as claimed in either of Claims 1 and 2,
**characterized in that**
the electronic memory (14; 15; 16) in the form of an EEPROM and the digital I/O module (17) are accommodated in a common housing (18) arranged in the path of a four-core cable harness (13).

## Revendications

1. Disjoncteur ( 1 ) électrique ayant un dispositif ( 10 ) électronique de protection et une mémoire ( 14, 15, 16 ) électronique de données de fonctionnement du disjoncteur ( 1 ) logée dans le disjoncteur ( 1 ) séparément dans l'espace du dispositif ( 10 ) de protection et dans laquelle le dispositif ( 10 ) de protection peut lire et écrire,
**caractérisé en ce que**
la mémoire ( 14, 15, 16 ) électronique a un dispositif de protection d'écriture pouvant être activé ou être désactivé par une entrée ( /WC ) de protection d'écriture de la mémoire ( 14, 15, 16 ), **en ce que** la mémoire ( 14, 15, 16 ) électronique est reliée au dispositif ( 10 ) de protection par un bus de données série et **en ce qu'**à la mémoire ( 14, 15, 16 ) est associé un module ( 18 ) I/O numérique pouvant être commandé également par le dispositif ( 10 ) de protection au moyen du bus de données série, la sortie du module ( 18 ) I/O étant, pour l'activation ou pour la désactivation du dispositif de protection d'écriture, relié à l'entrée ( /WC ) de protection d'écriture de la mémoire ( 14, 15, 16 ) électronique.

2. Disjoncteur suivant la revendication 1,
**caractérisé en ce que**
le bus de données série est constitué en bus I²C.

3. Disjoncteur suivant l'une des revendications 1 ou 2,
**caractérisé en ce que**
la mémoire ( 14, 15, 16 ) électronique constituée sous la forme d'une EEPROM et le module ( 17 ) I/O numérique sont logés dans un boîtier ( 18 ) commun disposé à la suite d'un faisceau ( 13 ) de câbles à quatre brins.
